# EUROPÄISCHE PATENTSCHRIFT

(11) **EP 3 218 170 B1**
(45) Veröffentlichungstag und Bekanntmachung des Hinweises auf die Patenterteilung: **25.08.2021**
(21) Anmeldenummer: 15775722.0
(22) Anmeldetag: 09.10.2015
(51) Int. Cl.: B29C 70/20, B29C 70/46, B29C 45/14, B29C 70/24, B62D 29/04, B29L 31/30, B29L 24/00, B29L 31/00, B29C 45/17

(54) **FASERVERBUNDWERKSTOFFBAUTEIL SOWIE VERFAHREN ZUR HERSTELLUNG EINES FASERVERBUNDWERKSTOFFBAUTEILS**
FIBRE COMPOSITE MATERIAL COMPONENT, AND METHOD FOR PRODUCING A FIBRE COMPOSITE MATERIAL COMPONENT
ÉLÉMENT STRUCTURAL EN MATÉRIAU RENFORCÉ PAR DES FIBRES ET SON PROCÉDÉ DE FABRICATION

(30) Priorität: 11.11.2014 DE 102014222933
(43) Veröffentlichungstag der Anmeldung: 20.09.2017
(73) Patentinhaber: Bayerische Motoren Werke Aktiengesellschaft, 80809 München (DE)
(72) Erfinder: HOGGER, Thomas, 83624 Otterfing (DE); KONRAD, Oleg, 84030 Ergolding (DE)
(86) Internationale Anmeldenummer: PCT/EP2015/073329
(87) Internationale Veröffentlichungsnummer: WO 2016/074863

(56) Entgegenhaltungen:
- US-A1- 2006 165 955
- US-B1- 6 299 246

## Beschreibung

Die vorliegende Erfindung betrifft ein Faserverbundwerkstoffbauteil sowie ein Verfahren zur Herstellung eines Faserverbundwerkstoffbauteils.

Aus dem Stand der Technik ist bekannt, dass man mit thermoplastischem Material vorgetränkte Faserbündel und/oder Gelege und/oder Gewebe flächig anordnet, um Bauteile aufzubauen. Auch ist bekannt, dass man einzelne Stellen von faserverstärktem Kunststoff mit thermoplastischem Material mit und ohne Fasern umspritzt. Diese Verfahren dienen dazu, Stellen mit höherer Belastung, insbesondere Stellen der Krafteinleitung zu verstärken und so die Stabilität des Bauteils zu erhöhen.

Zudem ist bekannt, Bauteile im Spritzguss herzustellen. Dabei wird in eine Spritzgussform ein textiles Fasermaterial (wie zum Beispiel Gelege, Gewebe, Gestricke, Bündel oder dergleichen) eingelegt und anschließend mit thermoplastischem Material mit und ohne Fasern umspritzt. Aus den vorgenannten Verfahren werden Schalen oder Hohlbauteile mit geschlossener Fläche oder dergleichen hergestellt.

Die DE 10 2006 040 748 A1 offenbart beispielsweise ein Spritzgussverfahren für faserverstärkte Kraftfahrzeugteile aus faserverstärkten Thermoplasten durch Spritzguss.

Aus der US 6,299,246 B1 ist ein Faserverbundwerkstoffbauteil mit einer Tragkonstruktion aus mehreren miteinander verbundenen, hochfesten, mit Endlosfasern verstärkten Bauelementen gezeigt, die zumindest abschnittsweise von einem Polymerwerkstoff umgeben ist.

In der US 2006/0165955 A1 ist ein Faserverbundwerkstoffbauteil gezeigt, das aus faserverstärktem thermoplastischem Material mit eingebundenen mit Endlosfasern verstärkten Bauelementen gebildet ist.

Viele aus dem Stand der Technik bekannte Verfahren weisen jedoch den Nachteil auf, dass nur zweidimensionale bzw. flächige Faseranordnungen der Endlosfasern vorgesehen werden. Zugleich bewegt man sich dabei im Grenzbereich der Leichtbaufähigkeit und im Grenzbereich dessen, was mit belastungsgerechter Faserlage erreichbar ist. Darüber hinaus wird ein hoher Materialeinsatz notwendig und es kann zu nicht unerheblichem Verschnitt kommen.

Wünschenswert wäre es daher, leichter, belastungsgerechter, mit weniger Materialeinsatz und weniger Verschnitt bauen zu können. Darüber hinaus sollen nach Möglichkeit Materialanhäufungen vermieden werden.

Es ist daher die Aufgabe der vorliegenden Erfindung, ein Faserverbundwerkstoffbauteil und ein Verfahren zur Herstellung eines Faserverbundwerkstoffbauteils der eingangs genannten Art in vorteilhafter Weise weiterzubilden, insbesondere dahingehend, dass leichter gebaut werden kann, belastungsgerechtere Faserlagen möglich sind, der Materialeinsatz verringert sowie auch der Verschnitt verringert werden kann.

Diese Aufgabe wird erfindungsgemäß gelöst durch ein Faserverbundwerkstoffbauteil mit den Merkmalen des Anspruchs 1. Danach weist ein Faserverbundwerkstoffbauteil Faserbündel und eine Matrix aus thermoplastischem und/oder duroplastischem Material auf, wobei die Faserbündel derart angeordnet werden, dass sie ein Profil bilden, wobei je ein Faserbündel zusammen mit der Matrix im Profil eine Strebe ausbildet, die Bestandteil des Profils ist, wobei zwischen den Faserbündeln Verstrebungsmittel angeordnet sind, wobei wenigstens zwei Faserbündel windschief zueinander angeordnet sind, wobei sich der Verlauf von mindestens zwei Faserbündeln kreuzt, wobei wenigstens die beiden windschiefen und sich kreuzenden Faserbündel im Bereich ihrer Kreuzung derart in die Matrix eingebettet sind, dass die durch die beiden windschiefen Faserbündel ausgebildeten Streben in diesem Bereich jeweils eine Verbreiterung aufweisen, wobei im Bereich der Verbreiterung wenigstens eine Öffnung vorgesehen ist und die Öffnung mit einem Hohlraum verbunden ist, der in der Verbreiterung ausgebildet ist.

Die Erfindung basiert auf dem Grundgedanken, mittels wenigstens eines Hohlraums im Bereich der Kreuzung der zwei windschiefen Faserbündel Materialanhäufungen zu vermeiden. Die Verwendung windschiefer Faserbündel erlaubt es, die Struktur des Faserverbundwerkstoffbauteils mit Knoten bzw. Kreuzungen zu versehen. Diese Knoten bzw. Kreuzungen versteifen das Profil des Faserverbundwerkstoffbauteils. Dadurch lässt sich mit vergleichsweise geringem Gewicht ein sehr steifes Faserverbundwerkstoffbauteil herstellen, das z.B. als Karosseriebauteil verwendet werden kann. Das erfindungsgemäße Faserverbundwerkstoffbauteil weist insbesondere den Vorteil auf, dass insgesamt leichter als aus dem Stand der Technik bekannt gebaut werden kann, darüber hinaus eine dreidimensionale Anordnung von Endlosfasern ermöglicht ist und eine belastungsgerechtere Faserlage bereitgestellt werden kann. Hierdurch wird weiter erreicht, dass vorteilhafterweise der Materialeinsatz verringert werden kann und es zu weniger Verschnitt kommt.

Indem die Öffnung mit dem Hohlraum verbunden ist, ergibt sich der Vorteil, dass durch die Öffnung der Hohlraum zugänglich wird und beispielsweise Öffnung und Hohlraum für die Aufnahme eines Befestigungselements wie eines Bolzens oder einer Schraube genutzt werden können. Denkbar ist, dass mehrere Öffnungen vorgesehen sind, die mit dem Hohlraum verbunden sind. Diese Öffnungen können beispielsweise benutzt werden, um im Zusammenhang mit der Ausbildung des Hohlraums durch Innendruck-Spritzgießen (siehe auch nachfolgend) Schmelze aus dem Hohlraum auszublasen.

Ferner ist es durch die Ausbildung von Streben vorteilhaft möglich, die Belastungen im Profil zu lenken und trotz Leichtbauweise eine vergleichsweise hohe Stabilität zu erreichen. Die Streben können insbesondere Zugspannungen und/oder Biegespannungen aufnehmen.

Des Weiteren wird durch die Verbreiterung die Stabilität der Strebe und damit des Profils im Wesentlichen gleich erhalten bzw. nicht wesentlich oder nicht verringert. Somit können im Bereich der Verbreiterung Konstruktionselemente befestigt werden, die anderenfalls ggf. die Stabilität der Strebe beeinflussen oder beeinträchtigen könnten. Das Faserverbundwerkstoffbauteil kann wenigstens zwei oder mehrere Profile aufweisen, wobei je Profil wenigstens zwei Faserbündel windschief und sich kreuzend zueinander angeordnet sind und wobei im Bereich der Kreuzung der windschiefen Faserbündel wenigstens ein Hohlraum ausgebildet ist.

Die windschiefen und sich kreuzenden Faserbündel können senkrecht zueinander angeordnet sein. Dadurch kann einfach eine stabile, fachwerkartige Struktur im Profil bereitgestellt werden.

Grundsätzlich ist auch möglich, dass die windschiefen und sich kreuzenden Faserbündel einen spitzen Winkel einschließen.

### Wenigstens die beiden windschiefen und sich kreuzenden Faserbündel

Ferner ist denkbar, dass wenigstens ein Faserbündel ein UD-Faserbündel umfassend mehrere unidirektional angeordnete Fasern ist.

UD-Faserbündel sind Bündel umfassend mehrere unidirektional angeordnete Fasern, d.h. auch Faserbündel, die auch keine Verdrehung der Fasern aufweisen. Die Fasern können beispielsweise Kohlefasern sein. Denkbar ist auch, dass die Fasern Glasfasern sind. Ebenso können aber grundsätzlich auch Fasern aus einem sonstigen geeigneten Werkstoff gewählt werden.

Des Weiteren kann vorgesehen sein, dass wenigstens ein Faserbündel ausschließlich aus unidirektional angeordneten Fasern in Richtung des Verlaufs der Faserbündel besteht. Dies ermöglicht einen einfachen Aufbau des F aserverbundwerkstoffbauteils.

Darüber hinaus ist denkbar, dass wenigstens ein Faserbündel erste unidirektional angeordnete Fasern in Richtung des Verlaufs der Faserbündel und zweite unidirektional angeordnete Fasern, mit denen die ersten Fasern umflochten sind, aufweist. Hierdurch kann die Stabilität des Faserbündels verbessert werden.

Es ist möglich, dass zumindest ein Faserbündel an einer Kante des Profils des Faserverbundwerkstoffbauteils angeordnet ist und/oder dass die Faserbündel und die Verstrebungsmittel ein räumliches Profil bilden.

Es ist denkbar, dass mindestens drei Faserbündel vorgesehen sind und/oder dass die Faserbündel räumlich angeordnet werden.

Das Faserverbundwerkstoffbauteil kann ein Karosseriebauteil oder dergleichen sein. Denkbar ist beispielsweise, dass das Faserverbundwerkstoffbauteil ein Dachquerverbindungselement wie z.B. der Windlauf (d.h. die Dachquerverbindung im Bereich zwischen den beiden A-Säulen des Kraftfahrzeugs) eines Fahrzeugs ist.

Mittels der Faserbündel mit Endlosfasern können räumliche Anordnungen bereitgestellt werden. Durch die entsprechende Anordnung mit Verstrebungsmitteln können steife und stabile Profile bereitgestellt werden, so dass deutlich leichter gebaut werden kann. Folglich wird ein sehr hohes Leichtbaupotenzial bereitgestellt und ermöglicht. Darüber hinaus sind beliebige Profilgeometrien erzeugbar, was insbesondere bei Bauteilen mit hohem Freiformflächenanteil von Vorteil ist.

Des Weiteren ist möglich, dass die Fasern derart angeordnet sind, dass sie Biegespannungen und/oder Zugspannungen und/oder Druckspannungen aufnehmen bzw. aufnehmen können. Hierdurch ergibt sich der Vorteil, dass belastungsgerecht gebaut werden kann, wobei insbesondere Faserverbundwerkstoffbauteile bereitgestellt werden können, die derart gestaltet sind, dass sie für die an ihnen anliegenden Biegespannungen und/oder Zugspannungen und/oder Druckspannungen gemäß Auslegung belastungsgerecht ausgestaltet sind.

Ferner ist denkbar, dass die Verstrebungsmittel derart angeordnet sind, dass sie Torsionskräfte und/oder Schubkräfte übertragen und/oder aufnehmen bzw. aufnehmen können. Hierdurch ergibt sich der Vorteil, dass die neben den Biegespannungen, Zugspannungen oder Druckspannungen auftretenden Torsionskräfte oder Schubkräfte nicht durch die Faserbündel, sondern durch die hierfür vorgesehenen Verstrebungsmittel aufgenommen werden. Hierdurch wird insgesamt die Stabilität des Faserverbundwerkstoffbauteils erhöht, da für die jeweils auftretenden Belastungen eigene Elemente, nämlich für zum Beispiel Biegespannung und/oder Zugspannung und/oder Druckspannung die Faserbündel und für die Torsionskräfte und/oder Schubkräfte die Verstrebungsmittel vorgesehen sind. Hierdurch wird eine sehr stabile Struktur erreicht, wobei gleichzeitig jedoch das Gewicht nicht signifikant erhöht werden muss.

Außerdem ist möglich, dass zumindest ein Faserbündel zumindest einen freiliegenden Abschnitt aufweist, an dem keine Verstrebungsmittel angeordnet sind, wobei vorzugsweise vorgesehen ist, dass die Faserbündel in regelmäßigen oder unregelmäßigen Abständen freiliegende Abschnitte aufweisen und/oder dass der freiliegende Abschnitt zumindest teilweise gekrümmt oder gerade ist. Die freiliegenden Abschnitte erlauben es, die Faserbündel bei der Herstellung direkt im Werkzeug einzuspannen. Hierdurch wird verhindert, dass sich das Faserbündel beim Einspritzen des thermoplastischen und/oder duroplastischen Materials verschieben kann, was unerwünscht ist. Die Fertigungsgenauigkeit des Faserverbundwerkstoffbauteils wird hierdurch erhöht. Gleichzeitig wird auch Gewicht eingespart, weil weniger thermoplastisches und/oder duroplastisches Material eingesetzt wird bzw. nur die Masse an Material eingesetzt wird, die notwendig ist. Der Umstand, dass die Faserbündel in regelmäßigen oder unregelmäßigen Abständen freiliegende Abschnitte aufweisen, ist weiter deshalb vorteilhaft, weil hierdurch an diesen Punkten die Faserbündel gut im Werkzeug fixiert werden können.

Des Weiteren kann vorgesehen sein, dass die Verstrebungsmittel aus Schubflächen gebildet sind und/oder dass die Verstrebungsmittel durch Anspritzen von thermoplastischem und/oder duroplastischem Material oder durch Faserbündel gebildet sind. Hierdurch ergibt sich der Vorteil, dass leicht bauende Elemente, die zudem einfach erzeugt werden können, als Verstrebungsmittel eingesetzt werden können. Dies ist kostengünstig und erlaubt gleichzeitig eine leicht bauende Struktur. Das thermoplastische und/oder duroplastische Material kann auch faserverstärkt sein.

Denkbar ist weiter, dass die Faserbündel in Entformungsrichtung so versetzt angeordnet sind, dass sie ohne Schieber aus dem Spritzgusswerkzeug entfernbar sind. Dies erleichtert die Herstellung und führt darüber hinaus zu einer Verringerung der Herstellungszeiten, da die Entformung aus dem Spritzgusswerkzeug erleichtert ist. Durch den Wegfall des Schiebers werden erhebliche Kosteneinsparungen möglich, weil das erforderliche Werkzeug weniger komplex ist und kostengünstiger hergestellt werden kann.

Außerdem ist möglich, dass das Faserbündel mit geraden Bereichen und/oder gekrümmten Bereichen vorgesehen ist. Hierdurch ergibt sich der Vorteil, dass die Faserbündel somit einer beliebigen Kurve näherungsweise folgen können. Denkbar ist, dass die Bündel so gestaltet sind, dass sie aus geraden Bereichen und zum Beispiel kurzen gekrümmten Bereichen bestehen. In den kurzen gekrümmten Bereichen müssen die Faserbündel beispielsweise nicht umspritzt sein, um im Werkzeug an dieser Stelle fixiert werden zu können. Dies erlaubt eine besonders einfache Herstellung des Profils. Außerdem wird die Herstellung vereinfacht, da in den gekrümmten Bereichen keine Umspritzung erforderlich ist. Außerdem ist es von Vorteil, dass durch eine derartige Bündelgestaltung aus geraden und gekrümmten Bereichen einer beliebigen Kurve näherungsweise gefolgt werden kann, da hierdurch im Wesentlichen jegliche Freiformfläche erzeugt werden kann.

Darüber hinaus betrifft die vorliegende Erfindung ein Verfahren zur Herstellung eines Faserverbundwerkstoffbauteils gemäß Anspruch 1. Danach ist vorgesehen, dass bei einem Verfahren zur Herstellung eines Faserverbundwerkstoffbauteils mit Faserbündeln und mit einer Matrix aus thermoplastischem und/oder duroplastischem Material derart vorgegangen wird, dass die Faserbündel derart angeordnet werden, dass sie ein Profil bilden, wobei zwischen den Faserbündeln Verstrebungsmittel angeordnet werden, wobei wenigstens zwei Faserbündel windschief zueinander angeordnet werden und wobei im Bereich der Kreuzung der windschiefen Faserbündel wenigstens ein Hohlraum durch Innendruck-Spritzgießen ausgebildet wird.

Dadurch ergibt sich erfindungsgemäß der Vorteil, dass insgesamt leichter als aus dem Stand der Technik bekannt gebaut werden kann, darüber hinaus eine dreidimensionale Anordnung von Endlosfasern ermöglicht ist und eine belastungsgerechtere Faserlage bereitgestellt werden kann. Hierdurch wird weiter erreicht, dass vorteilhafterweise der Materialeinsatz verringert werden kann und es zu weniger Verschnitt kommt. Durch die Ausbildung des Hohlraums können Materialanhäufungen vermieden werden.

Das Innendruck-Spritzgießen, auch Fluidinjektionstechnik (FIT) genannt, ist ein spezialisiertes Spritzgussverfahren zur Herstellung hohler Werkstücke. Nach einem Arbeitsschritt des herkömmlichen Spritzgießens bzw. nach einer definierten Teilfüllung der Gussform wird ein vorübergehender Füllstoff (Wasser oder inertes Gas, in der Regel Stickstoff) so in eine teilgefüllte Form injiziert, dass es als inneres Formstück (Kern) wirkt. Durch die Verdrängung der Schmelze aus der Mitte wächst zum einen ein Hohlraum und zum anderen wird die Schmelze an bzw. in die äußere Gussform gedrückt. Nach Erstarren der Schmelze entweicht das Fluid wieder. Der Vorteil dieser Vorgehensweise ist, dass auf ein inneres Formstück verzichtet werden kann. Ferner können Strukturen ausgebildet werden, die derart beschaffen sind, dass ggf. nur schwer eine Entformung eines inneren Formstückes bzw. Kerns möglich wäre.

Das Innendruck-Spritzgießen kann ein Gasinnendruck-Spritzgießen sein. Beim Gasinnendruck-Spritzgießen verdrängt Gas die in der Spritzgussform befindliche Schmelze und übernimmt mit Drücken bis maximal 300 bar die Restfüllung. Das Injizieren kann beispielsweise durch die Maschinendüse und damit durch das Angusssystem oder durch eine separate Injektionsnadel direkt in das Formteil in der Kavität erfolgen. Eine weitere Variante ist die vollständige Füllung der Kavität mit Schmelze und anschließendem Ausblasen von Schmelze in eine Nebenkavität oder das Zurückblasen in den Schneckenzylinder der Spritzgussmaschine. Gasinnendruck-Spritzgießen kann insbesondere dann vorteilhafterweise eingesetzt werden, wenn Schwindung kompensiert werden und Masseanhäufungen vermieden werden sollen. Auch können sehr kleine Kanalquerschnitte realisiert werden. Gasinnendruck-Spritzgießen wird auch dann bevorzugt eingesetzt, wenn Wasser nicht aus dem Bauteil entfernt werden kann oder die Baugröße des Injektors ausschlaggebend ist.

Das Innendruck-Spritzgießen kann ein Innendruck-Spritzgießen mittels Fluidinjektionstechnik sein. Insbesondere kann es sich dabei um ein Wasserinnendruck-Spritzgießen handeln. Auch hier wird analog dem vorstehend beschriebenen Gasinnendruck-Spritzgießen die in der Spritzgussform befindliche Schmelze durch das Fluid verdrängt und das Fluid übernimmt die Restfüllung.

Vorteile, die sich durch die Verwendung von Fluiden wie Wasser ergeben, sind die deutliche Reduzierung der Taktzeit. Dies hängt unter Anderem mit der im Vergleich zu Gasen größeren Wärmekapazität von Fluiden bzw. Flüssigkeiten wie Wasser zusammen. Darüber hinaus ist auch eine Verbesserung der Oberflächenstruktur möglich. Flüssigkeiten wie Wasser kommen automatisch zum Zuge, wenn die Querschnitte und die Kanallänge in Abhängigkeit vom Material für die Gasinjektionstechnik zu groß werden und wenn in Bereichen ohne Faserverstärkung eine glatte, geschlossene Oberfläche gefordert ist. Im Allgemeinen spielt aber neben dem geringen Verzug die ebenfalls geringere erzielbare Restwanddicke eine zentrale Rolle. Betriebswirtschaftlich gesehen stehen die wesentlich kürzeren Taktzeiten und die nicht anfallenden Gaskosten bei der Auswahl von Wasser im Vordergrund. Bei großen Stückzahlen kann dies zu einer Reduzierung der Investitionskosten um bis zu 50 % führen (Halbierung der Fertigungslinien aufgrund des Effizienzanstiegs jeder einzelnen Linie).

Des Weiteren kann vorgesehen sein, dass die für das Herstellungsverfahren verwendeten Faserbündel UD-Faserbündel umfassend mehrere unidirektional angeordnete Fasern sind.

Im Verfahren verwendbare UD-Faserbündel sind Bündel umfassend mehrere unidirektional angeordnete Fasern, d.h. beispielsweise Faserbündel, die auch keine Verdrehung der Fasern aufweisen. Die Fasern können beispielsweise Kohlefasern sein. Denkbar ist auch, dass die Fasern Glasfasern sind. Ebenso können aber grundsätzlich auch Fasern aus einem sonstigen geeigneten Werkstoff gewählt werden.

Des Weiteren kann vorgesehen sein, dass wenigstens ein Faserbündel ausschließlich aus unidirektional angeordneten Fasern in Richtung des Verlaufs der Faserbündel besteht. Dies ermöglicht einen einfachen Aufbau des Faserverbundwerkstoffbauteils.

Darüber hinaus ist denkbar, dass wenigstens ein Faserbündel erste unidirektional angeordnete Fasern in Richtung des Verlaufs der Faserbündel und zweite unidirektional angeordnete Fasern, mit denen die ersten Fasern umflochten sind, aufweist. Hierdurch kann die Stabilität des Faserbündels verbessert werden.

Es ist denkbar, dass mindestens drei Faserbündel vorgesehen sind und/oder dass die Faserbündel räumlich angeordnet werden.

Das Faserverbundwerkstoffbauteil kann ein Karosseriebauteil oder dergleichen sein.

Mittels der Faserbündel mit Endlosfasern können räumliche Anordnungen bereitgestellt werden. Durch die entsprechende Anordnung mit Verstrebungsmitteln können steife und stabile Profile bereitgestellt werden, so dass deutlich leichter gebaut werden kann. Folglich wird ein sehr hohes Leichtbaupotenzial bereitgestellt und ermöglicht. Darüber hinaus sind beliebige Profilgeometrien erzeugbar, was insbesondere bei Bauteilen mit hohem Freiformflächenanteil von Vorteil ist.

Die vorstehend im Zusammenhang mit dem erfindungsgemäßen Faserverbundwerkstoffbauteil bzw. den möglichen Ausführungsbeispielen beschriebenen Merkmale und Vorteile können allein oder in Kombination ebenfalls bei dem erfindungsgemäßen Verfahren zur Herstellung eines Faserverbundwerkstoffbauteils oder den nachstehend beschriebenen möglichen Ausführungsbeispielen des Verfahrens vorgesehen sein.

Des Weiteren kann vorgesehen sein, dass zumindest ein Faserbündel an einer Kante des Profils des Faserverbundwerkstoffbauteils angeordnet ist oder wird und/oder die Faserbündel und die Verstrebungsmittel ein räumliches Profil bilden.

Des Weiteren kann vorgesehen sein, dass die Fasern derart angeordnet sind oder werden, dass sie Biegespannungen und/oder Zugspannungen und/oder Druckspannungen aufnehmen bzw. aufnehmen können. Darüber hinaus kann vorgesehen sein, dass die Verstrebungsmittel derart angeordnet sind oder werden, dass sie Torsionskräfte und/oder Schubkräfte übertragen und/oder aufnehmen bzw. übertragen und/oder aufnehmen können. Dies erleichtert, wie vorstehend bereits beschrieben, eine belastungsgerechte Auslegung des Faserverbundwerkstoffbauteils und unterstützt das Bestreben, möglichst leicht zu bauen.

Außerdem ist möglich, dass zumindest ein Faserbündel zumindest einen freiliegenden Abschnitt aufweist, an dem keine Verstrebungsmittel angeordnet sind, wobei vorzugsweise vorgesehen ist, dass die Faserbündel in regelmäßigen oder unregelmäßigen Abständen freiliegende Abschnitte aufweisen und/oder dass der freiliegende Abschnitt zumindest teilweise gekrümmt oder gerade ist. Wie vorstehend bereits im Detail beschrieben, ergibt sich hierdurch der Vorteil, dass im Wesentlichen jegliche Freiformfläche erzeugt werden kann. Ferner kann die Genauigkeit der Formgebung verbessert werden, weil die Faserbündel direkt im Werkzeug durch entsprechende Ausnehmungen im Werkzeug fixiert werden können, so dass ein Verrutschen der Faserbündel zuverlässig verhindert werden kann.

Ferner kann vorgesehen sein, dass die Faserbündel trocken eingesetzt werden. Hierdurch wird beispielsweise erreicht, dass das Einsetzen in das Werkzeug erleichtert werden kann. Auch sind Anwendungsfälle denkbar, in denen es nicht erwünscht ist, vorgetränkte Faserbündel einzusetzen.

Des Weiteren ist jedoch ebenso möglich, dass die Faserbündel vorgetränkt eingesetzt werden. Hierdurch kann beispielsweise eine Vorvernetzung und ein besserer Halt und Verbund mit dem umgebenden Material erreicht werden, sofern dies erforderlich ist.

Darüber hinaus ist denkbar, dass die Faserbündel in Entformungsrichtung so versetzt angeordnet werden, dass sie ohne Schieber im Spritzgusswerkzeug entformt werden können. Hierdurch wird die Werkzeugherstellung des Spritzgusswerkzeuges vereinfacht und kann wesentlich kostengünstiger realisiert werden.

Außerdem ist möglich, dass die Verstrebungsmittel aus Streben und/oder Schubflächen gebildet werden und/oder dass die Verstrebungsmittel durch Anspritzen von thermoplastischem und/oder duroplastischem Material oder durch Faserbündel gebildet werden. Hierdurch ergibt sich der Vorteil, dass leicht bauende Elemente, die zudem einfach erzeugt werden können, als Verstrebungsmittel eingesetzt werden können. Dies ist kostengünstig und erlaubt gleichzeitig eine leicht bauende Struktur.

Außerdem ist möglich, dass die Faserbündel mit geraden Bereichen und/oder gekrümmten Bereichen vorgesehen werden. Hierdurch ergibt sich der Vorteil, dass die Faserbündel somit einer beliebigen Kurve näherungsweise folgen können. Denkbar ist, dass die Bündel so gestaltet sind, dass sie aus geraden Bereichen und zum Beispiel kurzen gekrümmten Bereichen bestehen. In den kurzen gekrümmten Bereichen müssen die Faserbündel beispielsweise nicht umspritzt sein, damit sie im Werkzeug dort fixiert werden können. Dies erlaubt eine besonders einfache Herstellung des Profils. Außerdem wird die Herstellung vereinfacht, da in den gekrümmten Bereichen keine Umspritzung erforderlich ist. Außerdem ist es von Vorteil, dass durch eine derartige Bündelgestaltung aus geraden und gekrümmten Bereichen einer beliebigen Kurve näherungsweise gefolgt werden kann, da hierdurch im Wesentlichen jegliche Freiformfläche erzeugt werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines Grundgerüsts eines erfindungsgemäßen Faserverbundwerkstoffbauteils, hergestellt durch ein erfindungsgemäßes Verfahren;
- Figur 2 eine perspektivische Darstellung des erfindungsgemäßen Faserverbundwerkstoffbauteils;
- Figur 3 eine Draufsicht auf das Faserverbundwerkstoffbauteil gemäß Figur 2;
- Figur 4 eine Schnittdarstellung durch das Faserverbundwerkstoffbauteil gemäß Figur 2 und Figur 3 entlang des Schnittes A-A gemäß Figur 3;
- Figur 5 eine Draufsicht auf das Werkzeug für die erfindungsgemäße Herstellung eines erfindungsgemäßen Faserverbundwerkstoffbauteils;
- Figur 6 eine Darstellung des Schnittes A-A aus Figur 5;
- Figur 7 eine Darstellung des Schnittes B-B aus Figur 5;
- Figur 8 eine perspektivische Darstellung des erfindungsgemäßen Faserverbundwerkstoffbauteils;
- Figur 9 eine weitere perspektivische Darstellung des erfindungsgemäßen Faserverbundwerkstoffbauteils; und
- Figur 10 eine weitere perspektivische Darstellung des erfindungsgemäßen Faserverbundwerkstoffbauteils.

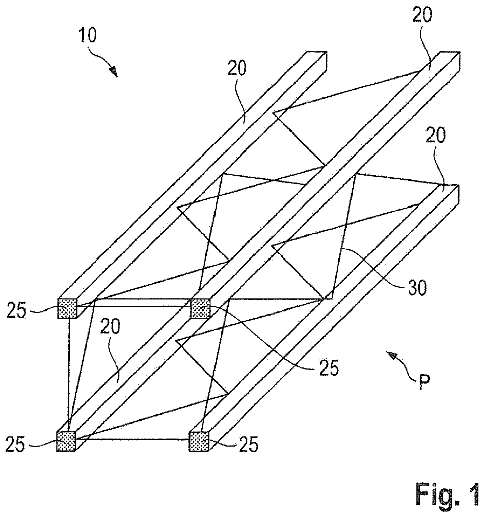

Figur 1 zeigt das Grundgerüst eines erfindungsgemäßen Faserverbundwerkstoffbauteils 10 ohne umgebendes Material, das durch ein erfindungsgemäßes Verfahren zur Herstellung des Faserverbundwerkstoffbauteils 10 erhalten wird.

Bei dem Herstellungsverfahren zur Herstellung des in Figur 1 gezeigten Faserverbundwerkstoffbauteils 10 werden hier zunächst Faserbündel 20 räumlich als Profil P angeordnet.

Das Profil P weist hier vier im Wesentlichen parallel angeordnete Faserbündel 20 mit Fasern 25 auf. Zwischen den Faserbündeln 20 sind mehrere Verstrebungsmittel 30 vorgesehen.

Mittels einer Matrix M aus thermoplastischem und/oder duroplastischem Material werden die Faserbündel 20 und die Verstrebungsmittel 30 miteinander verbunden. Die Verstrebungsmittel 30 können dabei Bestandteil der Matrix M sein.

Das fertige Faserverbundwerkstoffbauteil 10 weist somit Faserbündel 20 und eine Matrix M auf. Dabei sind die Faserbündel 20 derart angeordnet, dass sie ein Profil P bilden, wobei zwischen den Faserbündeln 20 Verstrebungsmittel 30 angeordnet sind.

Die Faserbündel 20 sind hier UD-Faserbündel, die mehrere unidirektional angeordnete Fasern 25 aufweisen.

Es ist möglich, dass die Faserbündel 20 ausschließlich aus unidirektional angeordneten Fasern in Richtung des Verlaufs der Faserbündel bestehen.

Alternativ ist aber auch denkbar, dass die Faserbündel 20 erste unidirektional angeordnete Fasern in Richtung des Verlaufs der Faserbündel 20 und zweite unidirektional angeordnete Fasern, mit denen die ersten Fasern umflochten sind, aufweisen.

In diesem Zusammenhang kann auch vorgesehen sein, dass wenigstens ein Faserbündel ausschließlich aus unidirektional angeordneten Fasern in Richtung des Verlaufs der Faserbündel 20 besteht und wenigstens ein weiteres Faserbündel erste unidirektional angeordnete Fasern in Richtung des Verlaufs der Faserbündel 20 und zweite unidirektional angeordnete Fasern, mit denen die ersten Fasern umflochten sind, aufweist.

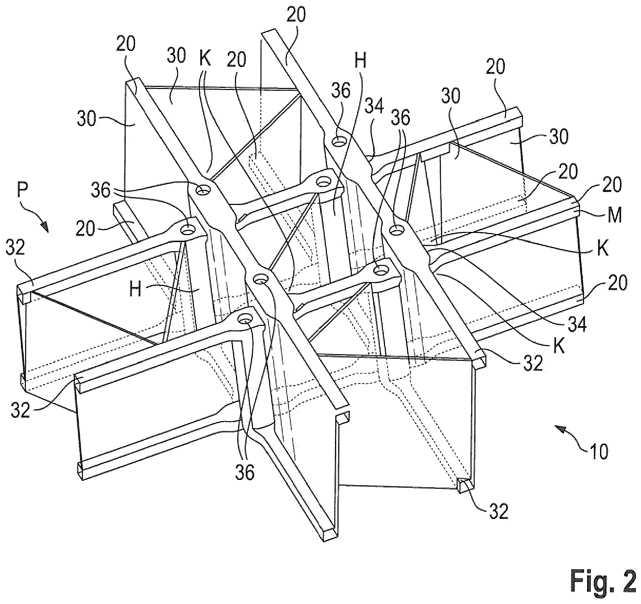

Figur 2 zeigt die Draufsicht auf ein erfindungsgemäßes Faserverbundwerkstoffbauteil 10, das durch ein erfindungsgemäßes Verfahren zur Herstellung des Faserverbundwerkstoffbauteils 10 erhalten wird und die vorstehend beschriebenen strukturellen und funktionalen Merkmale aufweist.

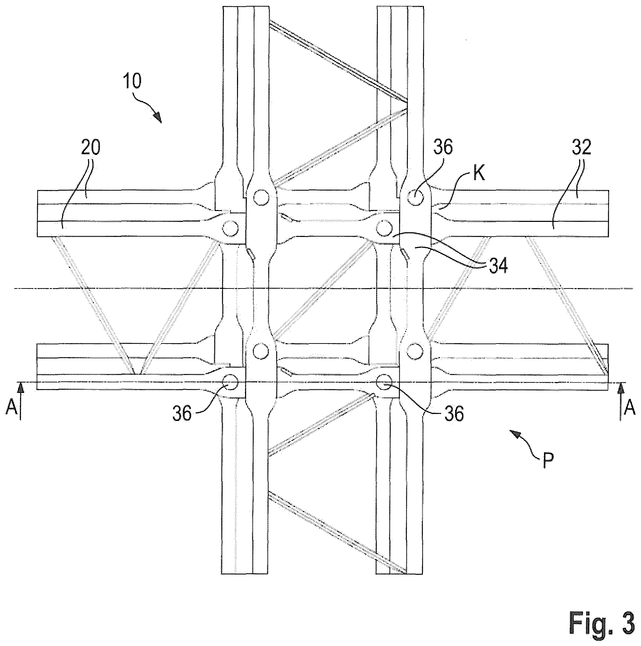

Figur 3 zeigt eine Draufsicht auf das Faserverbundwerkstoffbauteil 10 gemäß Figur 2.

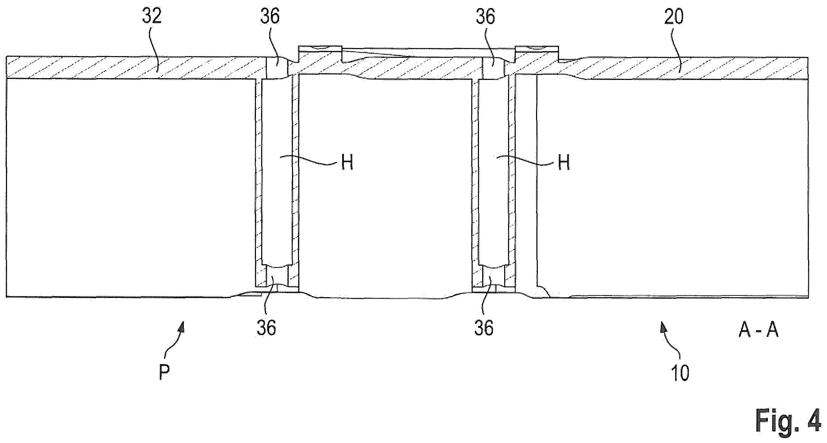

Figur 4 zeigt eine Schnittdarstellung durch das in Figur 2 und Figur 3 gezeigte Faserverbundwerkstoffbauteil 10.

Im Profil P sind mehrere Faserbündel 20 windschief zueinander angeordnet.

Die windschiefen Faserbündel 20 sind dabei senkrecht zueinander angeordnet.

Je eines dieser Faserbündel 20 bildet zusammen mit der Matrix M im Profil P eine Strebe 32 aus, die Bestandteil des Profils P ist.

Im Bereich einer Kreuzung K von je zwei windschiefen Faserbündeln 20 bzw. im Bereich einer Kreuzung K der jeweils zugehörigen Streben 32 ist wenigstens ein Hohlraum H ausgebildet.

Die Streben 32 weisen im Bereich ihrer Kreuzung K jeweils eine Verbreiterung 34 auf.

Im Bereich der Verbreiterung 34 ist wenigstens eine Öffnung 36 vorgesehen. Die Öffnung 36 ist, wie in Figur 4 gezeigt, mit dem Hohlraum H verbunden.

Zu beiden Längsenden des Hohlraums H ist dabei eine Öffnung 36 vorgesehen.

Das in Figur 2 gezeigte Profil P kann Bestandteil eines größeren Profils sein oder bereits ein eigenes Bauteil sein.

Das Profil P weist je zwei rahmenartige Gitter 38 auf, die jeweils aus vier windschiefen Streben 32 ausgebildet ist.

Die Gitter 38 sind dabei im Wesentlichen identisch aufgebaut. Sie befinden sich auf zwei entgegengesetzten Seiten des Profils P und spannen das Profil P auf bzw. dienen als Skelett für das Profil P.

Dabei sind bei jedem Gitter 38 jeweils in einer ersten Ebene zwei parallele Streben 32 vorgesehen und in einer von der Ebene beabstandeten Ebene zwei weitere zueinander parallele Streben 32 vorgesehen.

Die parallelen Streben 32 der ersten Ebene kreuzen sich und sind windschief und senkrecht zu den parallelen Streben 32 der zweiten Ebene angeordnet. Im Bereich jeder Kreuzung K ist jeweils ein Hohlraum H ausgebildet.

Die beiden Gitter 38 sind mittels mehrerer Verstrebungen 30 miteinander verbunden.

Die Funktion und Herstellung des in Figur 1, 2 und 3 gezeigten Faserverbundwerkstoffbauteils 10 lässt sich wie folgt beschreiben:
Die Faserbündel 20 sind dabei, wie in Figur 1, 2 und 3 gezeigt, zumindest an den äußeren Kanten des Profils P des Faserverbundwerkstoffbauteils 10 angeordnet und zwischen den Faserbündeln 20 sind Verstrebungsmittel 30, z.B. Rippen und Schubflächen, vorgesehen und angeordnet, sodass sich eine fachwerkartige Profilstruktur ergeben kann. Sodann werden die Faserbündel 20 und die Verstrebungsmittel 30 mit thermoplastischem oder duroplastischem Material umspritzt bzw. die Verstrebungsmittel durch das Anspritzen an die Faserbündel 20 erzeugt.

Die Kräfte werden sodann durch die Fasern 25 übertragen, wobei das thermoplastische oder duroplastische Material die Verbindung zwischen den Faserbündeln 20 herstellt. Durch die räumliche Anordnung können Profile P mit hoher Steifigkeit und hoher Stabilität bei minimalem Gewicht hergestellt werden. Durch die freie Anordnung der Faserbündel 20 im Raum können beliebige Profilformen ermöglicht werden, die zum Beispiel für B-Säulen, Tragstrukturen, Scheibenrahmen usw. verwendet werden können.

Die Fasern 25 können derart angeordnet werden, dass sie Biegespannungen und/oder Zugspannungen und/oder Druckspannungen aufnehmen.

Die Verstrebungsmittel 30 werden derart angeordnet, dass sie Torsionskräfte und/oder Schubkräfte übertragen und/oder aufnehmen können.

Es ist denkbar, dass die Faserbündel 20 trocken eingesetzt werden. Denkbar ist aber auch, dass sie vorgetränkt eingesetzt werden können.

Die Verstrebungsmittel 30 können aus Streben oder Schubflächen gebildet sein und es ist weiter denkbar, dass die Verstrebungsmittel durch Anspritzen von thermoplastischem oder duroplastischem Material oder durch Faserbündel 20 gebildet werden.

Es ist denkbar, dass die Faserbündel 20 in Entformungsrichtung so versetzt angeordnet werden, dass sie ohne Schieber aus dem Spritzgusswerkzeug entfernt werden können.

Des Weiteren kann vorgesehen sein, dass die Faserbündel 20 so gestaltet sind, dass sie aus geraden Bereichen und kurzen gekrümmten Bereichen bestehen und so einer beliebigen Kurve näherungsweise folgen können.

Der Hohlraum H wird bei der Herstellung des erfindungsgemäßen Faserverbundwerkstoffbauteils 10 durch Innendruck-Spritzgießen ausgebildet.

Das Innendruck-Spritzgießen kann ein Gasinnendruck-Spritzgießen oder ein Innendruck-Spritzgießen mittels Fluidinjektionstechnik, insbesondere ein Wasserinnendruck-Spritzgießen, sein.

Das erfindungsgemäße Verfahren bzw. das erfindungsgemäße Faserverbundwerkstoffbauteil 10 erlauben es, räumliche Anordnungen der UD-Faserbündel 20 mit Endlosfasern 25 zu erreichen, die nahezu beliebige Formgebungen ermöglichen. Es können steife und stabile Profile P erreicht werden, die darüber hinaus deutlich leichter als vergleichbare, bekannte Profile sein können. Somit ist ein sehr hohes Leichtbaupotenzial möglich. Darüber hinaus sind beliebige Profilgeometrien oder beliebige Bauteilformgebungen erzeugbar und es wird ein geringerer Materialbedarf erreicht. Insbesondere ist weniger Verschnitt bzw. kein Verschnitt vorhanden.

Die Hohlräume H dienen dazu, Materialanhäufungen zu vermeiden. Durch Innendruck-Spritzgießen wird der Einsatz von Schiebern oder Kernen überflüssig und die Herstellung vereinfacht.

Die skelettartige Struktur des Profils P ermöglicht vorteilhafterweise eine hohe Verwindungssteifigkeit des Faserverbundwerkstoffbauteils 10.

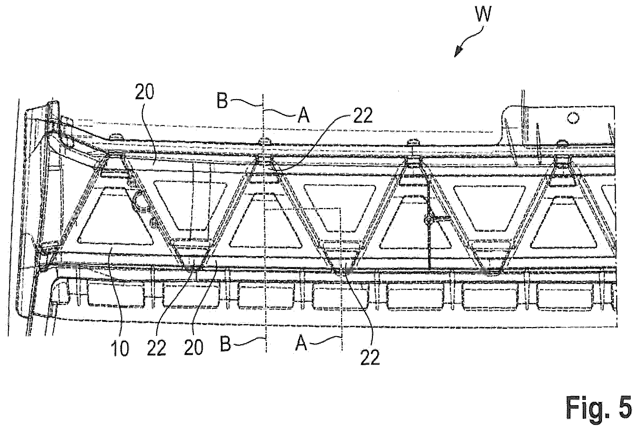

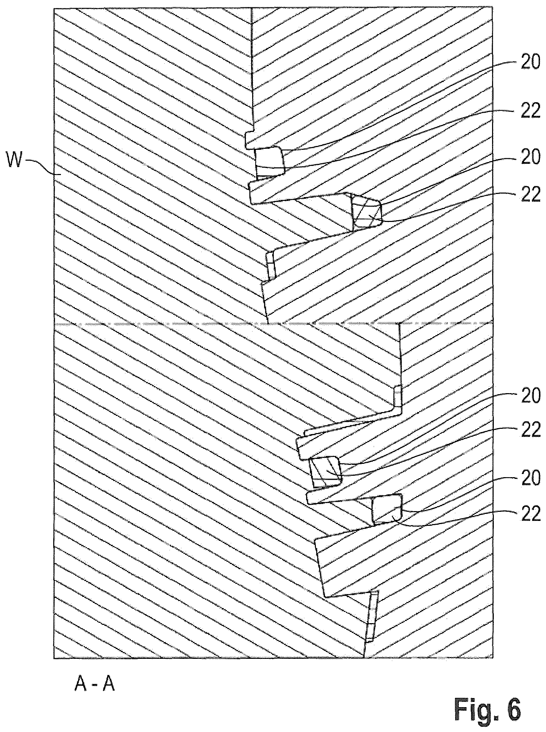

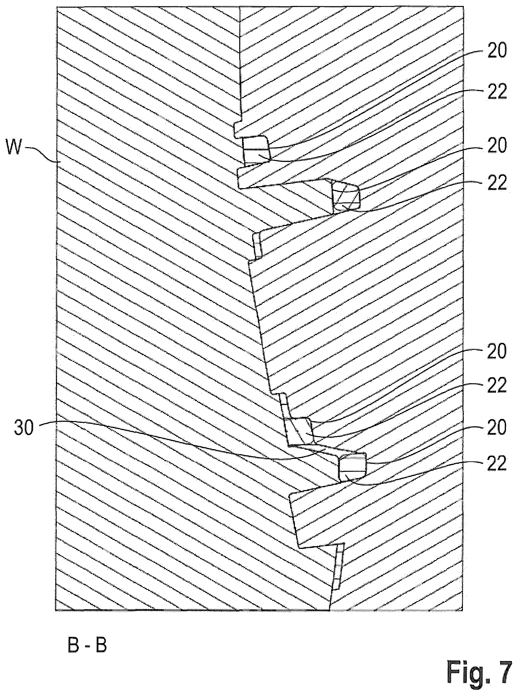

Figur 5 zeigt eine Draufsicht auf das Werkzeug W für die erfindungsgemäße Herstellung eines erfindungsgemäßen Faserverbundwerkstoffbauteils 10, hier ein Dachquerelement für ein Kraftfahrzeug, nämlich ein Windlauf. Figur 6 zeigt eine Darstellung des Schnittes A-A aus Figur 5 und Figur 7 zeigt eine Darstellung des Schnittes B-B aus Figur 5.

Das Faserverbundwerkstoffbauteil 10 gemäß Figur 5 weist sämtliche vorstehend im Zusammenhang mit Figur 1 gezeigten und beschriebenen Merkmale auf. Auch hier sind Faserbündel 20 räumlich als Profil P angeordnet und zwischen den Faserbündeln 20 sind Verstrebungsmittel 30 angeordnet, die die Faserbündel 20 miteinander verbinden. Die Faserbündel 20 können wie im Zusammenhang mit Figur 1 beschriebene UD-Faserbündel sein.

Wie aus den Figuren 5, 6 und 7 gut ersichtlich ist, sind in regelmäßigen Abständen freiliegende Abschnitte 22 vorgesehen, an denen keine Verstrebungsmittel 30 angeordnet sind. In diesen freiliegenden Abschnitten 22 sind die Faserbündel 20 dabei direkt im Werkzeug W eingelegt, wie dies insbesondere in Figur 6 und 7 gezeigt ist. Folglich sind die Faserbündel 20 beim Einspritzen von thermoplastischem oder duroplastischem Material an dieser Stelle im Werkzeug fixiert und bewegen sich nicht aus der Form. Eine hohe Formgenauigkeit ist daher möglich.

Die Faserbündel 20 können in regelmäßigen oder unregelmäßigen Abständen freiliegende Abschnitte 22 aufweisen. Grundsätzlich kann der freiliegende Abschnitt 22 zumindest teilweise gekrümmt oder gerade sein.

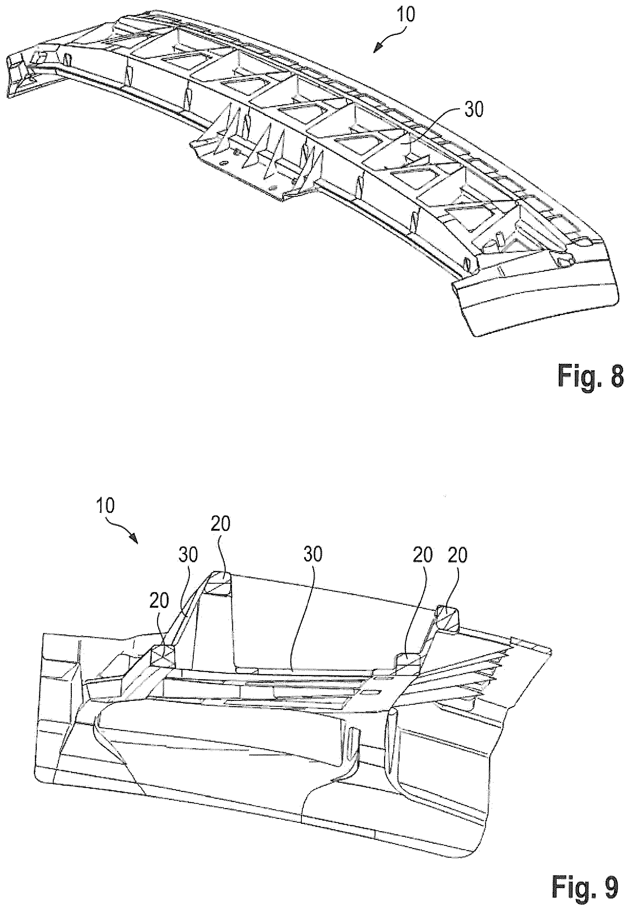

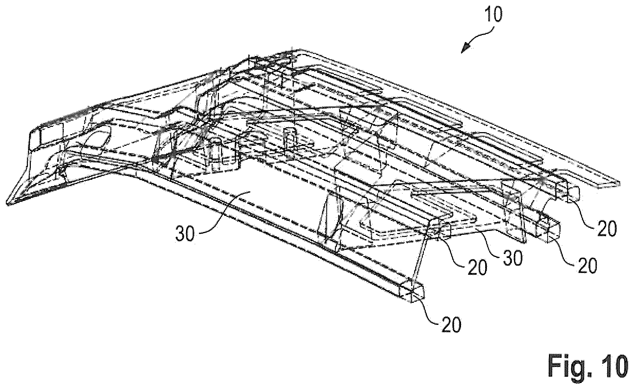

Figur 8 zeigt eine perspektivische Darstellung des erfindungsgemäßen Faserverbundwerkstoffbauteils 10 gemäß den Figuren 5 bis 7. In den Figuren 9 und 10 ist gebrochen das in Figur 8 gezeigte Faserverbundwerkstoffbauteil 10 gezeigt.

Die Faserbündel 20 sind dabei jeweils in den Kantenbereichen des Faserverbundwerkstoffbauteils 10 angeordnet. Hierdurch wird erreicht, die Fasern der Faserbündel 20 Biegespannungen und Zugspannungen und Druckspannungen aufnehmen können.

Die Verstrebungsmittel 30 sind demgegenüber derart angeordnet, dass sie Torsionskräfte und/oder Schubkräfte übertragen und/oder aufnehmen bzw. aufnehmen können.

## Patentansprüche

1. Faserverbundwerkstoffbauteil (10) mit Faserbündeln (20) und mit einer Matrix (M) aus thermoplastischem und/oder duroplastischem Material, wobei die Faserbündel (20) derart angeordnet werden, dass sie ein Profil (P) bilden, wobei je ein Faserbündel (20) zusammen mit der Matrix (M) im Profil (P) eine Strebe (32) ausbildet, die Bestandteil des Profils (P) ist, wobei zwischen den Faserbündeln (20) Verstrebungsmittel (30) angeordnet sind, wobei wenigstens zwei Faserbündel (20) windschief zueinander angeordnet sind und wobei wenigstens die beiden windschiefen und sich kreuzenden Faserbündel (20) im Bereich ihrer Kreuzung (K) derart in die Matrix (M) eingebettet sind, dass die durch die beiden windschiefen Faserbündel (20) ausgebildeten Streben (32) in diesem Bereich jeweils eine Verbreiterung (34) aufweisen, **dadurch gekennzeichnet, dass** im Bereich der Verbreiterung (34) wenigstens eine Öffnung (36) vorgesehen ist und die Öffnung (36) mit einem Hohlraum (H) verbunden ist, der in der Verbreiterung (34) ausgebildet ist.

2. Faserverbundwerkstoffbauteil (10) nach Anspruch 1, **dadurch gekennzeichnet, dass** das Faserverbundwerkstoffbauteil (10) wenigstens zwei oder mehrere Profile (P) aufweist, wobei je Profil (P) wenigstens zwei Faserbündel (20) windschief und sich kreuzend zueinander angeordnet sind und wobei im Bereich der Kreuzung der windschiefen Faserbündel (20) wenigstens ein Hohlraum (H) ausgebildet ist.

3. Faserverbundwerkstoffbauteil (10) nach einem der vorhergehenden Ansprüche, **dadurch gekennzeichnet, dass** wenigstens ein Faserbündel (20) ein UD-Faserbündel umfassend mehrere unidirektional angeordnete Fasern ist.

4. Faserverbundwerkstoffbauteil (10) nach einem der vorhergehenden Ansprüche, **dadurch gekennzeichnet, dass** wenigstens ein Faserbündel (20) ausschließlich aus unidirektional angeordneten Fasern in Richtung des Verlaufs der Faserbündel (20) besteht.

5. Faserverbundwerkstoffbauteil (10) nach einem der vorhergehenden Ansprüche, **dadurch gekennzeichnet, dass** wenigstens ein Faserbündel (20) erste unidirektional angeordnete Fasern in Richtung des Verlaufs der Faserbündel (20) und zweite unidirektional angeordnete Fasern, mit denen die ersten Fasern umflochten sind, aufweist.

6. Faserverbundwerkstoffbauteil (10) nach einem der vorhergehenden Ansprüche, **dadurch gekennzeichnet, dass** die Verstrebungsmittel (30) Rippen und/oder Schubflächen sind oder umfassen und/oder dass zumindest ein Faserbündel (20) an einer Kante des Profils des Faserverbundwerkstoffbauteils (10) angeordnet ist und/oder dass die Faserbündel (20) und die Verstrebungsmittel (30) ein räumliches Profil bilden und/oder dass die Faserbündel (20) derart angeordnet sind, dass sie Biegespannungen und/oder Zugspannungen und/oder Druckspannungen aufnehmen bzw. aufnehmen können und/oder dass die Verstrebungsmittel (30) derart angeordnet sind, dass sie Torsionskräfte und/oder Schubkräfte übertragen und/oder aufnehmen bzw. aufnehmen können.

7. Faserverbundwerkstoffbauteil (10) nach einem der vorhergehenden Ansprüche, **dadurch gekennzeichnet, dass** zumindest ein Faserbündel (20) zumindest einen freiliegenden Abschnitt aufweist, an dem keine Verstrebungsmittel (30) angeordnet sind, wobei vorzugsweise vorgesehen ist, dass die Faserbündel (20) in regelmäßigen oder unregelmäßigen Abständen freiliegende Abschnitte aufweisen und/oder dass der freiliegende Abschnitt zumindest teilweise gekrümmt oder gerade ist.

8. Faserverbundwerkstoffbauteil (10) nach einem der vorhergehenden Ansprüche, **dadurch gekennzeichnet, dass** die Verstrebungsmittel (30) aus Schubflächen gebildet sind, und/oder dass die Verstrebungsmittel (30) durch Anspritzen von thermoplastischem und/oder duroplastischem Material oder durch Faserbündel (20) gebildet sind und/oder dass die Faserbündel (20) in Entformungsrichtung so versetzt angeordnet sind, dass sie ohne Schieber aus dem Spritzgusswerkzeug entfernbar sind und/oder dass das Faserbündel (20) mit geraden Bereichen und/oder gekrümmten Bereichen vorgesehen ist.

9. Verfahren zur Herstellung eines Faserverbundwerkstoffbauteils gemäß Anspruch 1 (10) mit Faserbündeln (20) und mit einer Matrix (M) aus thermoplastischem und/oder duroplastischem Material, wobei Faserbündel (20) derart angeordnet werden, dass sie ein Profil (P) bilden, wobei zwischen den Faserbündeln (20) Verstrebungsmittel (30) angeordnet werden, wobei wenigstens zwei Faserbündel (20) windschief zueinander angeordnet werden, wobei im Bereich der Kreuzung (K) der windschiefen Faserbündeln (20) wenigstens ein Hohlraum (H) durch Innendruck-Spritzgießen ausgebildet wird.

10. Verfahren nach Anspruch 9, **dadurch gekennzeichnet, dass** das Innendruck-Spritzgießen ein Gasinnendruck-Spritzgießen ist.

11. Verfahren nach Anspruch 9, **dadurch gekennzeichnet, dass** das Innendruck-Spritzgießen ein Innendruck-Spritzgießen mittels Fluidinjektionstechnik ist, insbesondere ein Wasserinnendruck-Spritzgießen ist.

## Claims

1. Fibre composite material component (10) with fibre bundles (20) and with a matrix (M) of thermoplastic and/or thermosetting material, wherein the fibre bundles (20) are arranged so as to form a profile (P), wherein each fibre bundle (20) together with the matrix (M) forms a brace (32) in the profile (P), which is part of the profile (P), wherein bracing means (30) are arranged between the fibre bundles (20), wherein at least two fibre bundles (20) are arranged skewed with respect to one another, and wherein at least the two skewed and intersecting fibre bundles (20) are embedded in the matrix (M) in the region of their intersection (K) such that the braces (32) formed by the two skewed fibre bundles (20) each have a broadening (34) in this region, **characterized in that** at least one opening (36) is provided in the region of the broadening (34) and the opening (36) is connected to a cavity (H) which is formed in the broadening (34).

2. Fibre composite material component (10) according to Claim 1, **characterized in that** the fibre composite material component (10) comprises at least two or more profiles (P), wherein each profile (P) has at least two fibre bundles (20) arranged skewed with respect to each other and intersecting, and wherein at least one cavity (H) is formed in the region of the intersection of the skewed fibre bundles (20).

3. Fibre composite material component (10) according to either of the preceding claims, **characterized in that** at least one fibre bundle (20) is a UD fibre bundle comprising several unidirectionally arranged fibres.

4. Fibre composite material component (10) according to one of the preceding claims, **characterized in that** at least one fibre bundle (20) consists exclusively of unidirectionally arranged fibres in the direction of the run of the fibre bundles (20).

5. Fibre composite material component (10) according to one of the preceding claims, **characterized in that** at least one fibre bundle (20) comprises first unidirectionally arranged fibres in the direction of the run of the fibre bundles (20) and second unidirectionally arranged fibres with which the first fibres are interwoven.

6. Fibre composite material component (10) according to one of the preceding claims, **characterized in that** the bracing means (30) are or comprise ribs and/or shear surfaces, and/or **in that** at least one fibre bundle (20) is arranged at one edge of the profile of the fibre composite material component (10), and/or **in that** the fibre bundles (20) and the bracing means (30) form a three-dimensional profile, and/or **in that** the fibre bundles (20) are arranged such that they absorb or can absorb flexural stresses and/or tensile stresses and/or compressive stresses, and/or **in that** the bracing means (30) are arranged such that they transmit and/or absorb or can absorb torsional forces and/or shear forces.

7. Fibre composite material component (10) according to one of the preceding claims, **characterized in that** at least one fibre bundle (20) has at least one exposed segment, where no bracing means (30) are arranged, wherein preferably it is provided that the fibre bundles (20) have exposed segments at regular or irregular intervals and/or that the exposed segment is at least partly curved or straight.

8. Fibre composite material component (10) according to one of the preceding claims, **characterized in that** the bracing means (30) are formed from shear surfaces, and/or in that the bracing means (30) are formed by injecting of thermoplastic and/or thermosetting material or by fibre bundles (20), and/or **in that** the fibre bundles (20) are offset in the demoulding direction such that they can be removed from the injection-moulding tool without a pusher, and/or **in that** the fibre bundle (20) is provided with straight regions and/or curved regions.

9. Method for the production of a fibre composite material component (10) according to Claim 1 with fibre bundles (20) and with a matrix (M) of thermoplastic and/or thermosetting material, wherein fibre bundles (20) are arranged so as to form a profile (P), wherein bracing means (30) are arranged between the fibre bundles (20), wherein at least two fibre bundles (20) are arranged skewed with respect to one another, wherein at least one cavity (H) is formed in the region of the intersection (K) of the skewed fibre bundles (20) by internal-pressure injection moulding.

10. Method according to Claim 9, **characterized in that** the internal-pressure injection moulding is a gas internal-pressure injection moulding.

11. Method according to Claim 9, **characterized in that** the internal-pressure injection moulding is an internal-pressure injection moulding by means of fluid injection technique, especially a water internal-pressure injection moulding.

## Revendications

1. Composant en matériau composite de fibres (10) comprenant des faisceaux de fibres (20) et comprenant une matrice (M) en matière thermoplastique et/ou thermodurcissable, les faisceaux de fibres (20) étant agencés de telle sorte qu'ils forment un profilé (P), chaque faisceau de fibre (20) formant conjointement avec la matrice (M) dans le profilé (P) une entretoise (32), qui fait partie du profilé (P), des moyens d'entretoisement (30) étant agencés entre les faisceaux de fibres (20), au moins deux faisceaux de fibres (20) étant agencés en biais l'un par rapport à l'autre, et au moins les deux faisceaux de fibres (20) en biais et se croisant étant incorporés dans la matrice (M) dans la zone de leur croisement (K) de telle sorte que les entretoises (32) formées par les deux faisceaux de fibres en biais (20) présentent chacune un élargissement (34) dans cette zone, **caractérisé en ce qu'**au moins une ouverture (36) est prévue dans la zone de l'élargissement (34) et l'ouverture (36) est reliée à une cavité (H), qui est formée dans l'élargissement (34) .

2. Composant en matériau composite de fibres (10) selon la revendication 1, **caractérisé en ce que** le composant en matériau composite de fibres (10) comprend au moins deux profilés (P) ou plus, au moins deux faisceaux de fibres (20) étant agencés en biais l'un par rapport à l'autre et se croisant par profilé (P), et au moins une cavité (H) étant formée dans la zone du croisement des faisceaux de fibres en biais (20).

3. Composant en matériau composite de fibres (10) selon l'une quelconque des revendications précédentes, **caractérisé en ce qu'**au moins un faisceau de fibres (20) est un faisceau de fibres UD comprenant plusieurs fibres agencées unidirectionnellement.

4. Composant en matériau composite de fibres (10) selon l'une quelconque des revendications précédentes, **caractérisé en ce qu'**au moins un faisceau de fibres (20) est constitué exclusivement de fibres agencées unidirectionnellement dans la direction de l'étendue du faisceau de fibres (20).

5. Composant en matériau composite de fibres (10) selon l'une quelconque des revendications précédentes, **caractérisé en ce qu'**au moins un faisceau de fibres (20) comprend des premières fibres agencées unidirectionnellement dans la direction de l'étendue du faisceau de fibres (20) et des deuxièmes fibres agencées unidirectionnellement, avec lesquelles les premières fibres sont tressées.

6. Composant en matériau composite de fibres (10) selon l'une quelconque des revendications précédentes, **caractérisé en ce que** les moyens d'entretoisement (30) sont ou comportent des nervures et/ou des surfaces de poussée et/ou **en ce qu'**au moins un faisceau de fibres (20) est agencé sur un bord du profilé du composant en matériau composite de fibres (10) et/ou **en ce que** les faisceaux de fibres (20) et les moyens d'entretoisement (30) forment un profilé spatial et/ou **en ce que** les faisceaux de fibres (20) sont agencés de telle sorte qu'ils absorbent ou peuvent absorber des contraintes de flexion et/ou des contraintes de traction et/ou des contraintes de compression, et/ou **en ce que** les moyens d'entretoisement (30) sont agencés de telle sorte qu'ils transmettent et/ou absorbent ou peuvent absorber des forces de torsion et/ou des forces de poussée.

7. Composant en matériau composite de fibres (10) selon l'une quelconque des revendications précédentes, **caractérisé en ce qu'**au moins un faisceau de fibres (20) comprend au moins une section libre, sur laquelle aucun moyen d'entretoisement (30) n'est agencé, il étant de préférence prévu que les faisceaux de fibres (20) présentent des sections libres à des intervalles réguliers ou irréguliers, et/ou **en ce que** la section libre est au moins partiellement incurvée ou droite.

8. Composant en matériau composite de fibres (10) selon l'une quelconque des revendications précédentes, **caractérisé en ce que** les moyens d'entretoisement (30) sont formés par des surfaces de poussée, et/ou **en ce que** les moyens d'entretoisement (30) sont formés par moulage par injection de matière thermoplastique et/ou thermodurcissable ou par des faisceaux de fibres (20), et/ou **en ce que** les faisceaux de fibres (20) sont agencés dans la direction de démoulage avec un décalage tel qu'ils peuvent être extraits sans coulisseau de l'outil de moulage par injection, et/ou **en ce que** le faisceau de fibres (20) est prévu avec des zones droites et/ou des zones incurvées.

9. Procédé de fabrication d'un composant en matériau composite de fibres (10) selon la revendication 1 comprenant des faisceaux de fibres (20) et comprenant une matrice (M) en matière thermoplastique et/ou thermodurcissable, les faisceaux de fibres (20) étant agencés de telle sorte qu'ils forment un profilé (P), des moyens d'entretoisement (30) étant agencés entre les faisceaux de fibres (20), au moins deux faisceaux de fibres (20) étant agencés en biais l'un par rapport à l'autre, au moins une cavité (H) étant formée par moulage par injection à pression intérieure dans la zone du croisement (K) des faisceaux de fibres en biais (20) .

10. Procédé selon la revendication 9, **caractérisé en ce que** le moulage par injection à pression intérieure est un moulage par injection à pression intérieure de gaz.

11. Procédé selon la revendication 9, **caractérisé en ce que** le moulage par injection à pression intérieure est un moulage par injection à pression intérieure au moyen d'une technique d'injection de fluide, notamment un moulage par injection à pression intérieure d'eau.
